# EUROPEAN PATENT SPECIFICATION

(11) **EP 0 507 981 B1**
(45) Date of publication and mention of the grant of the patent: **15.11.1995**
(21) Application number: 91107101.7
(22) Date of filing: 02.05.1991
(51) Int. Cl.: A62D 3/00, B01D 12/00, C02F 11/00, C22B 1/00, C22B 7/00, C23G 5/04

(54) **Method to treat toxic and harmful sludges coming from metal processings so as to remove metals and their alloys**
Verfahren zur Behandlung von giftigen und schädlichen Metallverarbeitungsschlammen um Metalle und ihre Legierungen zu entfernen
Procédé de traitement des boues nocives et toxiques provenant du traitement de métaux pour élimener les métaux et leurs alliages

(30) Priority: 10.04.1991 IT UD910057
(43) Date of publication of application: 14.10.1992
(73) Proprietor: C.R.R.F. Srl, I-20157 Milano (IT); Perini, Gianpiero, I-20026 Novate Milanese (MI) (IT)
(72) Inventor: Cauzzo, Mario, I-20158 Milano (IT); Perini, Gianpiero, I-20026 Novate Milanese (MI) (IT)
(74) Representative: Petraz, Gilberto Luigi

(56) References cited:
- EP-A- 0 241 668
- GB-A- 2 072 708
- US-A- 4 409 020
- PATENT ABSTRACTS OF JAPAN vol. 6, no. 90 (C-104)(968) 27 May 1982 & JP-A-57 019 356 (NIPPON STAINLESS K.K.) 1 February 1982
- JAPANESE PATENTS GAZETTE Section Ch, Week C42, 26 November 1980 Derwent Publications Ltd., London, GB; Class D, Page 9, AN 74365 C/42 & JP-A-55 115 494 (KOYAMA YUSHI KOGYO) 5 September 1980

## Description

This invention concerns a method to treat toxic and harmful sludges coming from metal processings so as to remove metals and their alloys, as set forth in the main claim.

The method according to the invention is applied to the field of disposal and reuse, after treatment, of sludges containing metallic residues together with oils and/or lubricating coolants produced by the processing of metals and their alloys with removal of materials.

It is known that the mechanical processing of metals and their alloys, for instance by turning, milling, spark erosion, grinding and the like, produces material easy to recover, such as swarf, and also toxic and harmful wastes which contain not only metallic or non-metallic fines but also oils and/or lubricating coolants employed in the processing of the metal.

These oils and/or lubricating coolants prevent, on the one hand, the recycling of the metallic fines contained in the wastes and, on the other hand, prevent disposal of the wastes in refuse dumps.

For this reason the wastes containing oils are collected and taken to a storage zone in the plant processing the metals and are sent at a later time in appropriate containers to a treatment plant.

Owing to their varying nature due to the type of metal or alloy processed and due to the type of process applied, these oily metallic wastes are stored in appropriate tanks according to the specific treatment which they will undergo.

The oily metallic wastes from these appropriate storage tanks are immitted into the treatment line where the separation and partial recovery of the oily substances take place.

The process to separate the oil is based essentially on the combined, cooperating action of the decantation and flotation steps.

The recovered oils form a good-quality fuel, which can be employed as a fuel in an incineration line.

The process to separate the oil leads also to the following non-recoverable by-products:
- mixed sludges
- spent waters to be treated.

While the first above by-products are normally sent to an incineration section, the second are sent to a plant for chemical, physical and biological treatment before being discharged.

It should be noted that in this way not only are the metallic components of the wastes not recovered, but their disposal requires a waste of energy employed for their destruction by heat.

Moreover, their incineration causes pollution of the ground and air owing to the release of flying ashes, dusts and cinders as a result of the process.

The present applicant has studied, tested and obtained this invention so as to obviate the shortcomings of the state of the art and to achieve other advantages.

The invention is set forth and characterized in the main claim, while the dependent claims describe variants of the idea of the main solution.

According to the invention both the oils and metallic fines contained in the residues resulting from the processing of metals and their alloys can be recovered.

The recovered oils, as in the state of the art, form a good-quality fuel product which can be employed as a fuel in an incineration line or for other purposes.

The metallic fines can be separated out and converted into a finished end product suitable for delivery to the customers in question or to a specific user.

The fines of the processing of metals and alloys together with the oils and/or lubricating coolants are conveyed from the places where they are produced in special sealed containers according to the regulations in force.

On arrival at the treatment plant the containers are emptied into special tanks. The processing fines are sorted according to the types of metals or alloys processed and according to the types of process undergone, since the end product obtained by the method according to the invention depends on these factors.

The processing fines are decanted into the tanks and thereafter the greater part of the liquids or fluids contained in the tanks is pumped out by suitable pump means.

These fluids are stored in appropriate tanks before being further treated or being sent directly, for instance, to an incineration plant.

In this preliminary step it is possible to separate out at least 90% of the fluids contained in the residues.

The remainder of the processing residues is delivered with the help of suitable means into a mixer-separator machine made advantageously of an inoxidisable material and fully watertight and airtight.

A mixture of solvents is immitted into the mixer-separator and, coming into contact with the processing residues therein, causes a physical separation of the components of the processing residues.

This mixture of solvents consists advantageously of the following components in the following percentages by volume:

| | |
|---|---|
| - 1,1,1-TRICHLOROETHANE | from 50% to 60% |
| - COAL-TAR NAPHTHA SOLVENT | from 10% to 15% |
| - WHITE SPIRIT | from 25% to 35% |
| - DIISODECILADIPATE | from 2.5% to 5% |

This mixture of solvents is employed in various proportions according to the material to be treated and the quantity of the solvent mixture used varies substantially between the following limits:
- minimum - 0.5 kg. of solvent mixture per 1 kg. of product;
- maximum - 1.0 kg. of solvent mixture per 1 kg. of product.

With this mixture of solvents it is possible to separate from the fines more than 90% of the oily residue remaining after decantation.

As an alternative, petroleum-based and chemical solvents can be used instead of the above mixture.

When the processing fines have been washed with the solution immitted into the mixer-separator, the fluid mixture capable of being pumped is sent to a filtration step.

The filtration step can be carried out with filter presses, from which there emerge a solid phase containing the fines separated from the oily mixture and a liquid phase containing a mixture of the mixed solvents and of the oils or other foreign fluids included in the initial product.

The liquid phase is sent to a distillation column, whence there emerge, on the one hand, the mixture of solvents and, on the other hand, the impurities consisting of the oils and other foreign fluids.

According to the method of this invention it is possible to recover by means of distillation up to 99% of the mixture of solvents delivered into the mixer-separator, thus reducing the consumption of that solution, and its resulting replenishment, to a very small quantity, with lower running costs of the treatment plant.

The mixture of solvents is returned to the cycle and delivered into the mixer-separator or into a solvent storage tank, whereas the oils and foreign fluids are stored in appropriate tanks and thereafter treated and disposed of according to the regulations in force.

The solid phase from the filtration undergoes a dehumidifying and drying step, which reduces the humidity of the product down to a value between 2% and 0%.

As an end product with a maximum humidity of 2% is acceptable without problems to customers such as foundries, it is useless in this case to proceed with drying beyond this limit, even though it would be enough to raise the drying temperature from 40°C to 60°C, for instance.

The vapours resulting from the dehumidifying and drying step are sent to a vapour treatment process to recover the solvent, which can be returned to the cycle in the mixer-separator or in the solvent storage tank.

In this way, besides reducing the consumption of the specific solvent mixture, it is possible to prevent the loss into the atmosphere of the vapours of the solvents, which themselves too are the cause of atmospheric pollution.

The procesing fines, when they have been purified of their oily component and of the foreign fluids contained originally in the fines and have been dried, undergo a disintegration step to obtain material having a granule size required by the clients to whom the finished metal will be sold.

According to the method of the invention it is possible to separate and recover wholly the fines and the oils and liquid lubricating coolants contained in the treated sludges.

The financial advantage of the solution illustrated by this invention should be noted since it enables resources to be reused which are not degradable and which would otherwise be discharged into the environment.

The attached flow sheet, which is given as a non-restrictive example, shows a block diagram of a possible cycle to convert the oily metallic fines of this invention and makes clear the various steps of the method and the flow of the various materials.

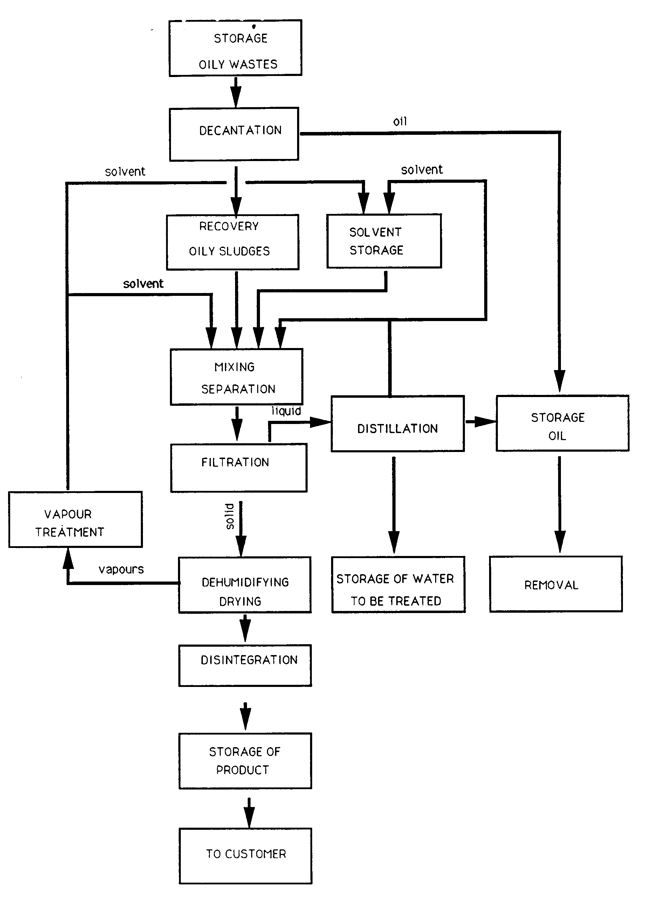

## Claims

1. Method to treat toxic and harmful sludges coming from metal processings so as to remove metals and their alloys, whereby the oily fines resulting from the mechanical processing of metals and their alloys are stored and decanted, and the oily sludges are recovered, the method being characterized in that the oily sludges are immitted into an impermeable mixing-sorting machine, into which is introduced a mixture of solvents comprising 1,1,1-trichloroethane, coal-tar naphtha solvent, white spirit and diisodecyladipate, with which the sludges are mixed for washing purposes, the mixture being then sent to an assembly of filter presses to separate the liquid phase from the solid phase, the liquid phase being sent to a still for recovery of the solvent and the oily aggregates separately.

2. Method as claimed in Claim 1, in which the solid phase undergoes a drying process and thereafter a disintegration process to obtain material of a desired granule size.

3. Method as claimed in Claim 1 or 2, in which the drying process brings the solid phase to a humidity content between 2% and 0%, with recovery of the solvent vapours.

4. Method as claimed in any claim hereinbefore, in which the mixture of solvents includes the following components in the following percentages by volume:
| | |
|---|---|
| - 1,1,1-TRICHLOROETHANE | from 50% to 60% |
| - COAL-TAR NAPHTHA SOLVENT | from 10% to 15% |
| - WHITE SPIRIT | from 25% to 35%. |

5. Method as claimed in any claim hereinbefore, in which the mixture of solvents includes also the following component in the following percentage by volume:
| | |
|---|---|
| - DIISODECILADIPATE | from 2.5% to 5%. |

6. Method as claimed in any claim hereinbefore, in which the quantity of the solvent mixture is correlated with the type of fines to be treated and will vary from 0.5 kg. per each kilogram of oily sludges to be treated up to 1.0 kg. per each kilogram of oily sludges to be treated.

## Patentansprüche

1. Verfahren zur Behandlung von giftigen und schädlichen, aus der Metallverarbeitung kommenden Schlämmen, um Metalle und ihre Legierungen zu entfernen, wobei die aus der mechanischen Verarbeitung von Metallen und deren Legierungen resultierenden öligen Feinstoffe gelagert und dekantiert und die öligen Schlämme rückgewonnen werden, dadurch gekennzeichnet, daß die öligen Schlämme in eine undurchlässige Misch-Sortiermaschine eingebracht werden, in welche ein Gemische von Lösungsmitteln bestehend aus 1,1,1-Trichlorethan, Steinkohlenteer-Solventnaphtha, Terpentinölersatz und Diisodecyladipat eingeführt wird, mit dem die Schlämme zu Waschzwecken vermischt werden, wobei das Gemisch einer Anordnung von Filterpressen zugeführt wird, um die flüssige Phase von der festen Phase abzutrennen, welche flüssige Phase einer Destillierapparatur für die getrennte Rückgewinnung des Lösungsmittels und der öligen Aggregate zugeführt wird.

2. Verfahren nach Anspruch 1, worin die feste Phase einem Trockenprozeß und danach einem Desintegrationsprozeß unterworfen wird, um ein Material von einer gewünschten Korngröße zu erhalten.

3. Verfahren nach Anspruch 1 oder 2, worin der Trockenprozeß die feste Phase auf einen Feuchtigkeitsgehalt zwischen 2% und 0% unter Rückgewinnung von Lösungsmitteldämpfen bringt.

4. Verfahren nach einem der vorhergehenden Ansprüche, worin das Lösungsmittelgemisch die folgenden Komponenten in den folgenden Volumsprozentanteilen enthält:
| | |
|---|---|
| - 1,1,1-TRICHLORETHAN | von 50% bis 60% |
| - SOLVENTNAPHTHA | von 10% bis 15% |
| - TERPENTINÖLERSATZ | von 25% bis 35% |

5. Verfahren nach einem der vorhergehenden Ansprüche, worin das Lösungsmittelgemisch auch folgende Komponente im folgenden Volumsprozentanteil enthält:
| | |
|---|---|
| - DIISODECYLADIPAT | von 2,5% bis 5%. |

6. Verfahren nach einem der vorhergehenden Ansprüche, worin die Menge des Lösungsmittelgemisches mit der Art der zu behandelnden Feinstoffe korreliert wird und zwischen 0,5 kg pro jedes Kilogramm an zu behandelnden öligen Schlämmen bis zu 1,0 kg pro jedes Kilogramm an zu behandelnden öligen Schlämmen variiert.

## Revendications

1. Procédé de traitement des boues nocives et toxiques provenant du traitement des métaux pour éliminer les métaux et leurs alliages, dans lequel les fines particules huileuses résultant du traitement mécanique des métaux et de leurs alliages sont stockées et décantées, et les boues huileuses sont récupérées, le procédé étant caractérisé en ce que les boues huileuses sont introduites dans une machine imperméable de mélange-séparation, dans laquelle on introduit un mélange de solvants comprenant du 1,1,1-trichloroéthane, du solvant naphte de coaltar, du white spirit et du diisodécyladipate, avec lesquels les boues sont mélangées dans un but de lavage, le mélange étant ensuite envoyé vers un dispositif de filtres presses pour séparer la phase liquide de la phase solide, la phase liquide étant elle envoyée vers un alambic pour la récupération du solvant et des agrégats huileux séparément.

2. Procédé selon la revendication 1, dans lequel la phase solide subit un processus de séchage et ensuite un procédé de désintégration pour obtenir le matériau de dimension de granule souhaitée.

3. Procédé selon la revendication 1 ou 2, dans lequel le processus de séchage conduit la phase solide à une teneur en humidité entre 2% et 0%, avec libération de vapeurs de solvant.

4. Procédé selon l'une quelconque des revendications précédentes, dans lequel le mélange de solvants inclut les composants suivants dans les pourcentages suivants en volume :
| | |
|---|---|
| - 1,1,1-trichloroéthane | de 50% à 60% |
| - solvant naphte de coaltar | de 10% à 15% |
| - white spirit | de 25% à 35% |

5. Procédé selon l'une quelconque des revendications précédentes, dans lequel le mélange de solvants inclut aussi le composant suivant dans le pourcentage suivant en volume :
| | |
|---|---|
| - diisodécyladipate | de 2,5% à 5% |

6. Procédé selon l'une quelconque des revendications précédentes, dans lequel la quantité du mélange de solvants est corrélée avec le type de fines particules à traiter et varie de 0,5 kg par kilogramme de boues huileuses à traiter à 1,0 kg par kilogramme de boues huileuses à traiter.
